# EUROPEAN PATENT APPLICATION

(11) **EP 3 009 745 A1**
(43) Date of publication of application: **20.04.2016**
(21) Application number: 15190073.5
(22) Date of filing: 16.10.2015
(51) Int. Cl.: F23R 3/06, F23R 3/00

(54) **FLOATWALL PANEL WITH DILUTION HOLE COOLING**

(30) Priority: 17.10.2014 US 201462065312 P
(71) Applicant: United Technologies Corporation, Hartford, CT 06101 (US)
(72) Inventor: HOKE, James B., Tolland, CT Connecticut 06084 (US); KWOKA, David, South Glastonbury, CT Connecticut 06073 (US)
(74) Representative: Gittins, Alex Michael

(57) **Abstract**

Aspects of the disclosure are directed to a liner of an aircraft. The liner comprises a panel 404 including at least one dilution hole 210 , a rail 418 coupled to the panel 404, and at least one effusion cooling hole 412 located between a wall 408a of the at least one dilution hole 210 and a side of the rail 418. The liner 400 may be associated with a combustion engine 10 of the aircraft.

## Description

### BACKGROUND

Engine combustors have exhibited hot metal temperatures in liner panels in proximity to combustion/dilution holes. These high temperatures are largely a result of the difficulty in delivering a cooling fluid (e.g., air) to the metal mass (e.g., grommet) that surrounds the hole. Accordingly, a change is needed to the panel and an associating holding structure (e.g., shell) in the region around the dilution holes in order to enhance the availability and reliability of the liner.

### SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a liner of an aircraft, comprising: a panel including at least one dilution hole, a rail coupled to the panel, and at least one effusion cooling hole located between a wall of the at least one dilution hole and a side of the rail. In some embodiments, the at least one effusion cooling hole includes a plurality of effusion cooling holes. In some embodiments, the rail is spaced from the wall by a distance of approximately 6.4 millimeters. In some embodiments, the rail is spaced from the wall in a radial direction away from the at least one dilution hole. In some embodiments, the liner further comprises at least a second effusion cooling hole located between a second side of the rail and a perimeter of the panel. In some embodiments, the liner further comprises a shell coupled to the panel. In some embodiments, the rail is configured to seal the panel against the shell to prevent leakage. In some embodiments, the liner is associated with a combustion engine of the aircraft.

### BRIEF DESCRIPTION OF THE DRAWINGS

The present disclosure is illustrated by way of example and not limited in the accompanying figures in which like reference numerals indicate similar elements.
FIG. 1 illustrates an exemplary gas turbine engine.
FIG. 2 illustrates a portion of a liner incorporating grommets in accordance with the prior art.
FIG. 3 illustrates the liner of FIG. 2 incorporating a shell in accordance with the prior art.
FIG. 4 illustrates a first view of a liner incorporating a rail and effusion cooling holes in accordance with aspects of the disclosure.
FIG. 5 illustrates a second view of the liner of FIG. 4.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems and methods are described for cooling a liner of an aircraft combustor. The liner may include a panel coupled to a holding structure/shell. The coupling may be facilitated by one or more rails. Effusion cooling holes may be incorporated into the panel in order to cool the panel.

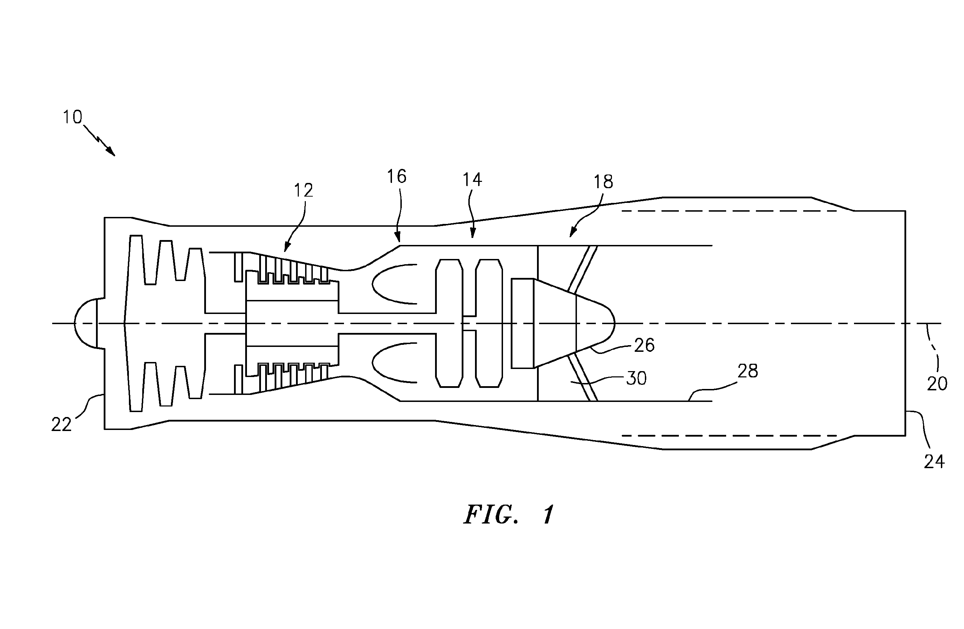

Aspects of the disclosure may be applied in connection with an aircraft, or portion thereof. For example, aspects of the disclosure may be applied in connection with a gas turbine engine. FIG. 1 is a side-sectional illustration of an exemplary gas turbine engine 10. The engine 10 includes a compressor section 12, a turbine section 14 and one or more engine hot sections. The engine hot sections may include, for example, a first engine hot section 16 configured as a combustor section and a second engine hot section 18 configured as an augmentor section. The compressor section 12, the first engine hot section 16, the turbine section 14 and the second engine hot section 18 may be sequentially aligned along an axial centerline 20 between a forward engine airflow inlet 22 and an aft engine airflow exhaust 24.

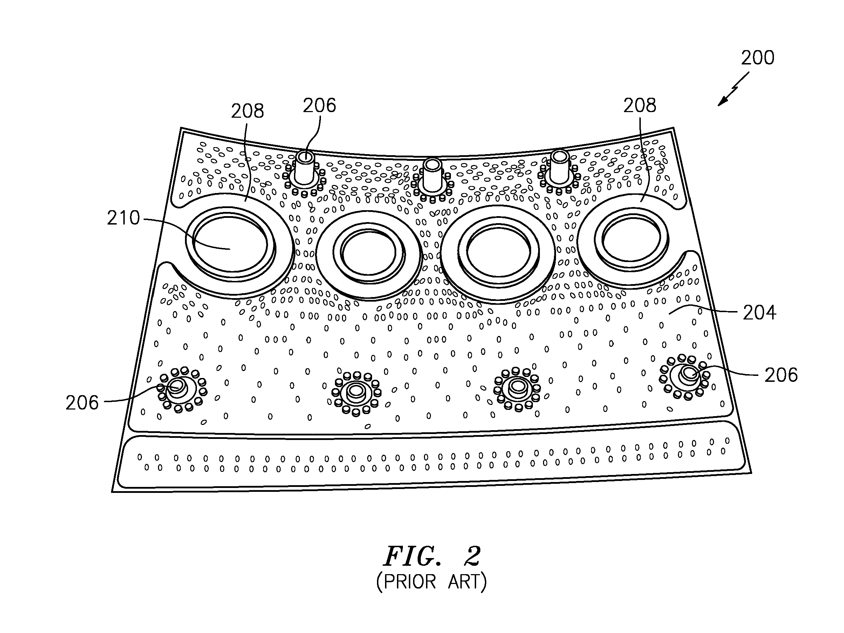

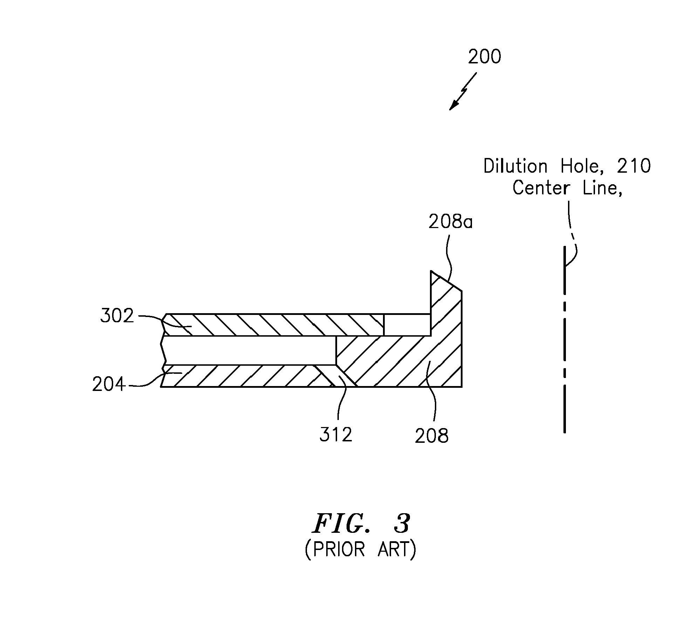

Referring to FIG. 2, a portion of a liner 200 is shown. The liner 200 includes a panel 204. The panel 204 may be referred to as, or correspond to, a float wall panel. A float wall panel is a panel that is designed to expand under a heat-load without cracking. The panel 204 may take the form of a tiled structure that includes threaded studs 206 that allow the panel 204 to be bolted to a shell 302 (see FIG. 3). The panel 204 includes grommets 208. At the center of the grommets 208 are dilution holes 210 that provide a combustion flow to the panel 204 and the associated combustor (e.g., first engine hot section 16 of FIG. 1). The panel 204 interfaces to the high temperatures associated with the combustor.

Referring to FIG. 3, the liner 200 of FIG. 2 is shown in more detail. The liner 200 includes the shell 302 at least partially coupled to the panel 204 via a grommet 208. The shell 302 may include impingement holes (not shown) as would be known to one of skill in the art. Also shown is a cooling hole 312 incorporated into the panel 204. For purposes of reference, a center line associated with the dilution hole 210 is shown via a dashed line in FIG. 3. A size (e.g., a diameter) of the dilution hole 210 may be referenced with respect to an edge/wall 208a of the grommet 208.

As described above, in can be difficult to provide a sufficient cooling flow to the panel 204 in the proximity of the grommet 208 (via, e.g., the cooling hole 312), due in large to the mass/thickness of the grommet 208 relative to the remainder of the panel 204. If an insufficient cooling flow is provided, the panel 204/grommet 208 may be subject to distress (e.g., melting and oxidation).

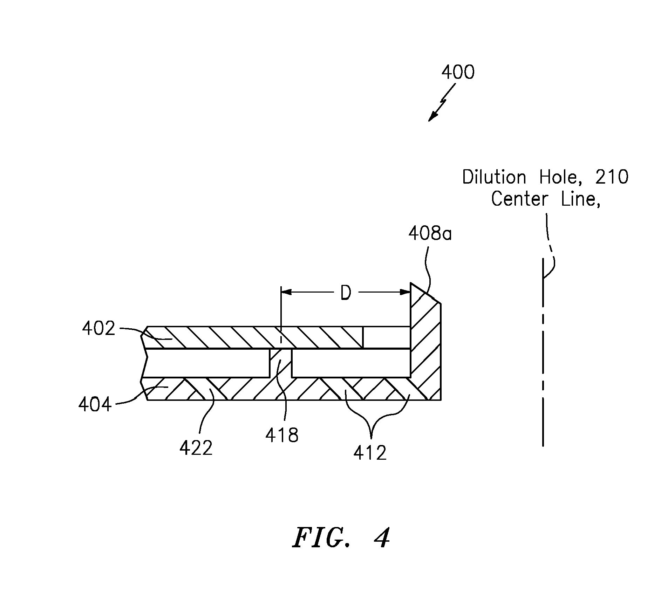

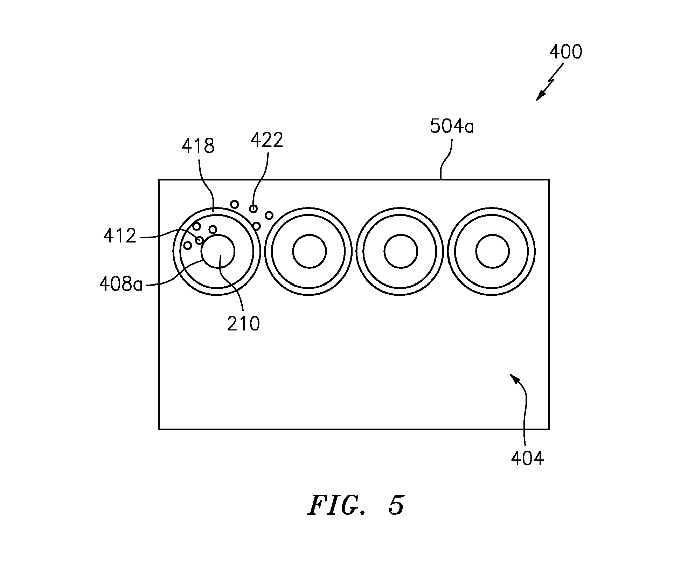

FIGS. 4-5 illustrate various views of a liner 400. The liner 400 includes a shell 402 (which may be similar to, or correspond to, the shell 302 of FIG. 3) coupled to a panel 404. The shell 402 may be at least partially coupled to the panel 404 via one or more rails 418. For example, the rail 418 may seal the panel 404 against the shell 402 to prevent leakage. The rail 418 may be cast in connection with the panel 404, such that the rail 418 may be integral to, and may be made of the same material as, the panel 404.

The rail 418 may be spaced (in a radial direction) from an edge/wall 408a associated with the dilution hole 210 by a distance D. In some embodiments, the distance D may be approximately 6.4 millimeters. The spacing D allows for the insertion of one or more effusion cooling holes 412 adjacent to the wall 408a, or in a location corresponding to a region of the panel 404 between the wall 408a and a first side of the rail 418. The holes 412 have a high pressure loss through them. Additional cooling holes 422 may be included in the panel 404 on the other/second side of the rail 418, in between the rail 418 and a perimeter 504a of the panel 404.

Technical effects and benefits of this disclosure include a cost-effective design for cooling a panel. Cooling may be provided via effusion holes incorporated in the panel between a rail and an edge/wall of a dilution hole.

Aspects of the disclosure have been described in terms of illustrative embodiments thereof. Numerous other embodiments, modifications, and variations within the scope and spirit of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A liner of an aircraft, comprising:
a panel (404) including at least one dilution hole (210);
a rail (418) coupled to the panel (404); and
at least one effusion cooling hole (412) located between a wall (408a) of the at least one dilution hole (210) and a side of the rail (418).

2. The liner of claim 1, wherein the at least one effusion cooling hole (412) includes a plurality of effusion cooling holes (412).

3. The liner of claim 1 or 2, wherein the rail (418) is spaced from the wall (408a) by a distance of approximately 6.4 millimeters.

4. The liner of claim 1, 2 or 3, wherein the rail (418) is spaced from the wall (408a) in a radial direction away from the at least one dilution hole (210).

5. The liner of any preceding claim, further comprising:
at least a second effusion cooling hole (422) located between a second side of the rail (418) and a perimeter (504a) of the panel (404).

6. The liner of any preceding claim, further comprising:
a shell (402) coupled to the panel (404).

7. The liner of claim 6, wherein the rail (418) is configured to seal the panel (404) against the shell (402) to prevent leakage.

8. The liner of any preceding claim, wherein the liner (400) is associated with a combustion engine (10) of the aircraft.
